# EUROPEAN PATENT SPECIFICATION

(11) **EP 1 923 981 B1**
(45) Date of publication and mention of the grant of the patent: **05.10.2016**
(21) Application number: 07120558.7
(22) Date of filing: 13.11.2007
(51) Int. Cl.: H02K 21/24, H02K 16/02

(54) **Axail air gap type electric motor**
Elektromotor mit axialem Luftspalt
Moteur électrique de type à entrefer axial

(30) Priority: 16.11.2006 JP 2006310719
(43) Date of publication of application: 21.05.2008
(73) Proprietor: Fujitsu General Limited, Kanagawa-ken 213-8502 (JP)
(72) Inventor: Kojima, Tomonori, Kawasaki-shi, Kanagawa-ken 213-8502 (JP); Tanno, Toshiaki, Kawasaki-shi, Kanagawa-ken 213-8502 (JP); Maeyama, Ken, Kanasaki-shi, Kanagawa-ken 213-8502 (JP); Matsuzaki, Hirokazu, Kawasaki-shi, Kanagawa-ken 213-8502 (JP); Tanabe, Yoichi, Kawasaki-shi, Kanagawa-ken 213-8502 (JP)
(74) Representative: Gill Jennings & Every LLP

(56) References cited:
- EP-A- 1 193 829
- EP-A- 1 684 399
- WO-A-03/094328
- GB-A- 589 039
- US-A- 6 042 349
- US-A1- 2004 164 641
- US-A1- 2005 035 672
- US-B1- 6 720 688

## Description

### TECHNICAL FIELD

The present invention relates to an axial air gap type motor comprising a stator and a rotor which are formed almost with a discoid shape and arranged as facing each other at a fixed gap at the identical rotation axis. More specifically, the present invention relates to a configuration of the axial air gap type motor for realizing a torque up without an increase of the coil diameter.

### BACKGROUND ART

Conventionally, axial air gap motors (axial-direction gap type motors) exist as one of motor types. The axial air gap motors are motors in which rotors are arranged at a discoid stator as facing at a fixed gap in the axial direction and the length of the axial direction can be shortened in comparison with radial gap type motors, being advantageous to be able to make the motors thinner types. JP-A-2004-282989 describes an axial air gap motor in which the purpose is to conduct the assembly works of the stators including processing of crossovers in the axial air gap motors efficiently.

Recently, (e.g. JP-A-09(1997)-150777) electric bicycles with a driving force by an electric motor assisted in addition to a driving force by man power which enables its comfortable running at slopes have been already proposed variously. It is desirable for electric bicycles to compactly accommodate the driving mechanism and have a light weight. From these viewpoints, the axial air gap type motor is suitable for electric bicycles because the electric motor itself can be made a thin type.

Another motor is described in JP-A-2003-219603.

For electric bicycles, a large torque as well as the conditions of its small size and lightweight explained above is required. In JP-A-09(1997)-150777, although the axial air gap type motor is used, because only a rotor for a stator is arranged, there is a possibility that its torque cannot be obtained sufficiently.

Generally, because a torque T of the electric motor is proportional to an electric current level I running through a coil, the torque can be increased by increasing the current I. In order to increase the current I, it is effective to reduce a resistance level R of the coil. Increasing the diameter of the coil enables to reduce the resistance R of the coil. However, although the torque increases in case of the same number of winding by this means, when it is attempted to realize the same number of winding in case of larger diameter of the coil, it is not avoidable to make the stator part so larger that it cannot meet the requirements of being small in size and having a light weight for electric bicycles. Although it is also considered to increase the voltage applied to the coil in order to increase the current I, losses (such as copper and iron losses) also increase and it is not thus effective. Moreover, the battery for applying a high voltage becomes large in size, which is a problem.

US 6,720,688 describes an electric machine which can be operated as a motor or generator, with a rotor rotatably mounted in a housing, a rotor shaft which extends beyond the housing and a plurality of electromagnetic components which are statically disposed in the housing at uniform angular spacings and spaced from the axis of rotation of the rotor, each with a coil core bearing a coil winding consisting of one or more conductors. The pole faces of the end faces of the coil cores are aligned with pole faces of permanent magnets which are retained non-rotatably in or on the rotor and each have a polarity which is successively reversed in the peripheral direction. The coil cores of the electromagnet components are disposed parallel to the axis of rotation of the rotor shaft in the interior of the housing in such a way that their opposing end faces each lie in two planes which are spaced from one another and extend at right angles to the axis of rotation of the rotor shaft. The ends of the electric conductors which form the coil winding of the individual electromagnetic components are interconnected via an electric or electronic control device to form at least two pairs of electrical connections.

EP 1 193 829 discloses a stator of a rotary electromechanical device comprises an annular stator core in which a plurality of magnetic pole teeth projecting radially inward are formed at specific intervals in a circumferential direction, a plurality of coils closely wound around the individual magnetic pole teeth with bobbins placed in between, a plurality of first connecting conductors disposed in concentric circular form along an axial end face of the stator core, joining together terminal ends of each group of the coils of the same phase which are connected parallel to one another at one side of the coils, and a second connecting conductor disposed in circular form concentrically with the individual first connecting conductors joining together terminal ends of all the coils at their opposite side, wherein extreme ends of the first and second connecting conductors are bent into radial directions at specific positions along the circumferential direction of the stator core and led radially outward in a plane perpendicular to the axial direction of the stator core at specific intervals.

The present invention is taken those problems above-mentioned into consideration. Objects of the present invention are to realize the torque-up without an increase in the size of the electric motor and also provide a highly efficient axial air gap type electric motor.

### DISCLOSURE OF THE INVENTION

In accordance with the present invention, there is provided an axial air gap type electric motor with three-phase configuration comprising a stator and two rotors each of which is formed substantially with a discoid shape about a common rotation axis facing each other and with a fixed gap, wherein said stator comprises 3n-n indicates an integer of 2 or higher-pole members connected like a ring and said pole members comprise teeth and an insulator insulating the teeth and a coil part, and among said pole members, the coils of the pole members of the same phase being connected electrically in parallel, wherein said rotor is configured as such that multiple magnets are formed at an equal interval annually at positions facing an annular stator core when facing said stator and the ratio of the number of said pole members and the number of the magnets becomes 3n:4n-n indicates an integer of 2 or higher-and said rotor comprises a back yoke arranged at the same axis as said stator and a molding-applicable magnetic material and has the magnets mounted at said back yoke as facing the teeth of said stator, and said back yoke has Mg-molded holes forming said magnets, and the Mg-molded holes are set at each site per magnetic pole of said magnets.

Preferably, said magnets are formed in such a manner that the non-circular Mg-molded holes are penetrated the back yoke configuring the rotor in the circumferential direction of the positions facing said teeth at an equal interval, and each plastic magnet is molded integrally for the Mg-molded holes.

Because 3n pole members configuring the stator core are connected as becoming parallel connections, the resistance level can be reduced in comparison with case of serial connection and the current level running through the coil can be increased. Consequently, the torque up can be realized.

Typically, several magnets are arranged at a certain equal interval at positions where the rotor faces a ring-like stator core when facing the stator and the ratio of the numbers of the pole members and the magnets becomes 3n:4n (n indicates a integer of 2 or higher).

Making the ratio of the number of pole members and the number of magnets 3n:4n (n indicates an integer of 2 or higher) enables to make a combination in which a symmetric property is present between the number of slots and the number of poles and no circulation current occurs and also to obtain a higher output.

The rotor may comprises a back yoke arranged at the same axis as the stator and a moldable magnetic and has magnets mounted at the back yoke as facing the teeth of the stator, the back yoke has Mg-molded holes forming the back yoke, and the Mg-molded holes are set at each magnetic hole of the magnets with one each.

Because it is arranged in such a manner that one magnet is formed for each Mg-molded hole, waves at the central part of the waves become those close to sine waves having the largest magnetic flux distribution. Thus, cogging torques can be prevented, leading to improve the torque.

The magnets may be formed with non-perfect circular Mg-molded poles being penetrated the back yoke configuring the rotor at an equal interval in the circumferential direction of the position facing the teeth and plastic magnets are molded integrally for the Mg-molded holes.

Because it is arranged in such a manner that one magnet is formed for one non-perfect circle Mg-molded hole, waves at the central part of the waves become those close to sine waves having the largest magnetic flux distribution. Thus, cogging torques can be prevented, leading to improve the torque. Moreover, the non-perfect circular shape enables to prevent the magnets to rotate.

### BRIEF DESCRIPTION OF THE DRAWINGS

Fig.1 shows a cross-sectional drawing outlining the internal configuration of the axial air gap type electric motor of the present invention.
Fig.2 (a) shows a circuit diagram of a conventional serial connection method in three-phase electric motors. Fig.2 (b) shows a circuit diagram of a parallel connection method applied in the present invention.
Fig.3 (a) - (c) are oblique perspective figures showing the configuration of the pole members in order. Fig.3 (d) is an oblique perspective figure showing the stator core formed by connecting the pole members.
Fig.4 (a) and (b) are oblique perspective figures showing in case of the stator core formed by mold insert.
Fig.5 (a) - (c) are oblique perspective figures showing the configuration of the rotors in order.
Fig.6 shows the configuration of the rotor in the axial air gap type electric motor of the present invention, wherein (a) is the front view, (b) the cross-sectional view of A-A' line, (c) the rear view, (d) the cross-sectional view of B-B', and (e) a schema showing a magnetic flux distribution on B-B' line.
Fig.7 is an oblique perspective figure showing assembly processes of the stator and rotor.
Fig.8 (a) shows a table about the relationship between the number of poles and the coefficient of the coil in 3n case of slot number. Fig.8 (b)-(d) show graphs comparing the efficiency of the motors between 3n:2n and 3n:4n.
Fig.9 is an oblique perspective view showing the configuration of a spring material 44 as a bias means.
Fig.10 shows the configuration of the rotor in conventional axial air gap type electric motors, wherein (a) is the front view, (b) the cross-sectional view of A-A' line, (c) the rear view, (d) the cross-sectional view of B-B' line, and (e) a schema showing a magnetic flux distribution on B-B' line.

### BEST MODE FOR CARRYING OUT THE INVENTION

The axial air gap type electric motor of the present invention comprises a stator and two rotors which are formed almost with a discoid shape and arranged as facing each other with a fixed gap at an identical rotation axis, wherein the stator has a stator core comprising 3n (n indicates an integer of 2 or higher) pole members connected like a ring and parallel connections are made in case of connection with the pole members by three-phase configuration, and the rotors have multiple magnets formed like a ring at a certain equal interval at positions at which each magnet faces the ring-like stator core when the rotor faces the stator and the ratio of the pole members and the number of the magnets is 3n:4n (n indicates an integer of 2 or higher).

Based on the following drawings, the present invention will be explained.

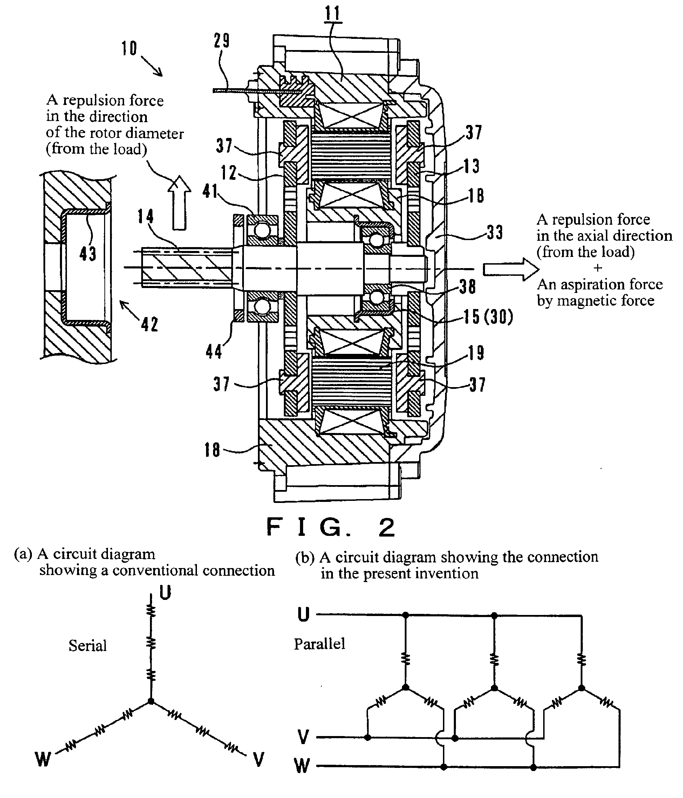

Fig.1 is an outlined cross-sectional diagram of the internal configuration of an axial air gap type electric motor of the present invention. As shown in Fig.1, the axial air gap type electric motor 10 comprises a roughly discoid stator 11 and a pair of rotors 12 and 13 arranged with a fixed gap on each side of the stator 11 facing each other, wherein the rotors 12 and 13 share an identical rotor output axis 14, and the stator 11 has a bearing 15 supporting the rotor output axis 14 at the inner circumferential side.

The stator 11 comprises a stator core 16 formed like a ring (doughnut-like) with the bearing 15 inserted concentrically at the inner circumferential side of the stator core 16, which are molded by synthetic resin 18.

In addition, the word, "bearing" written in this specification, means whole configurations fixing the axes including near synthetic resins which mold pole bearing, bearing housing and bearing housing.

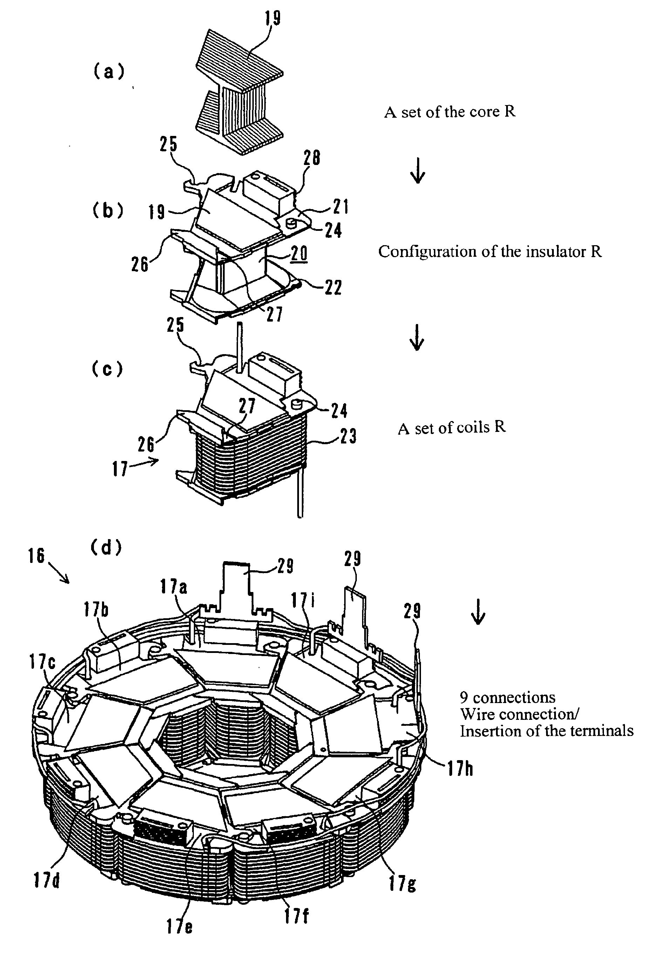

As shown in Fig.3 (d), the stator core 16 is formed by connecting multiple (nine in this example) pole members 17a-17i like a ring. Each of the pole members 17a-17i has an identical shape. Fig.3 (a)-(c) shows the configuration of one of the pole members 17a.

As shown in Fig.3 (a), the pole member 17a has teeth 19 (an iron core of the stator) comprising roughly H-letter shaped laminated multiple layers of metal plates. As shown in Fig.3 (b), an insulator 20 by synthetic resin is formed entirely around the teeth 19 except for the upper and lower surfaces (on the drawing). The insulator 20 can be formed in such a manner that the teeth 19 is placed in a cavity of a formed metal mold not shown in the diagram and a dissolved resin is then infused into the cavity.

In addition, besides laminated layers, the teeth can be formed uniformly by powder-formation or others. Although the teeth 19 is arranged at the center of each pole member 17a-17i in this example, the configuration of the present invention is applicable for the pole member 17a-17i without the teeth 19, namely with an air core coil.

In the insulator 20 formed as such, the whole including roughly sector shaped flanges 21 and 22 arranged as a pair of the upper and lower ones along the upper and lower surfaces of the teeth 19 is formed like a cross-sectional H-letter bobbin. In this example, the sector open angle of the flanges 21 and 22 is 40° (360°/9). Presence of the insulator 20 enables to wind a coil 23 on the teeth in an orderly manner, and also to preserve an electric insulation between the teeth 19 and coil 23. The pole member 17a shown in Fig.3 (c) is completed by winding the coil 23 at the insulator 20 formed as such. Similar procedures are taken for the other pole members 17b-17i.

As shown in Fig.3 (a)-(c), the flanges 21 and 22 of each of the pole members 17a-17i have a boss 24 formed at the outer circumferential side of either edge of the flanges 21 and 22 and an engaging chase 25 formed at the outer circumferential side of another edge as a connection means to connect adjacent pole members to each other. There are an engaging convex part 26 formed at the inner circumferential side of either edge of the flanges 21 and 22 and an engaging concave part 27 formed at the inner circumferential side of another edge. Among these connection means, the boss 24 engages with the engaging chase 25 at an adjacent pole member side, and the engaging convex part 26 engages with the engaging concave part 27 at an adjacent pole member side.

Using the connection means, the ring-like shape of the stator core 16 is formed by 9 connections of the pole members 17a-17i. After the connections, the crossover of the coil 23 led from each pole member 17 is connected. At the flange 21, a crossover support material 28 is set to process the crossover of the coil 23.

Here, the connection method of the pole members 17a-17i is explained. Fig.2 (a) shows a circuit diagram when a conventional connection method is applied for a three-phase electric motor. The symbol of each resistive element in the diagram corresponds to the pole member (coil set). As shown in Fig.2 (a), in case of three-phase configuration of phases U, V and W, conventionally, coil sets were connected in series at each phase.

On the other hand, in the axial air gap type electric motor of the present invention, as shown in Fig.2 (b), the pole members 17a-17i are connected in parallel to form the three phases, phases U, V and W. Such parallel connection method in case of nine pole members enables to reduce the resistance level to 1/9 of that with the conventional serial connection method, consequently to increase the current level running through the coil without increasing the diameter of the coil and then to improve the torque. In addition, as for the pole members 17a-17i, they are connected in order to become phases U, V, W, U, V, W, ---. After the pole members 17a-17i are connected, as shown in Fig.3 (d), the stator core 16 is completed by connecting terminals 29 at three sites.

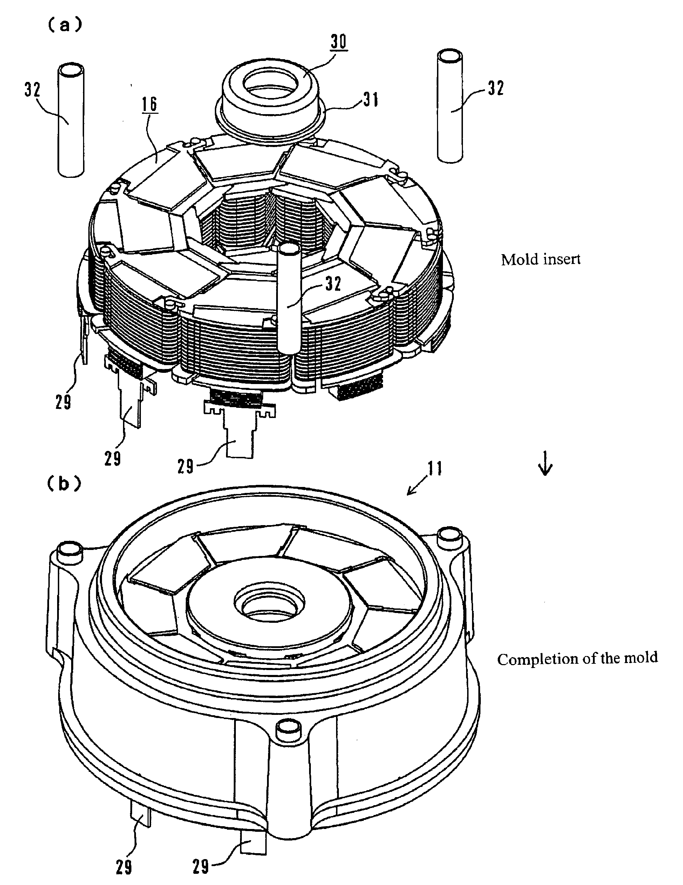

After the stator core 16 is formed, as shown in Fig.4, the whole stator core 16 is completed by infusing the synthetic resin 18 into the stator core for configuration of the mold insert. At that time, as shown in Fig.4 (a), a bearing housing 30 as the bearing 15 is also arranged at the center of the ring-like stator core 16 and the mold is conducted. The bearing housing 30 has a cylindrical shape whose one edge is closed except for a part through which the rotor output axis 14 passes and has a flange 31 protruding toward the outer side at the another edge. The flange 31 has a bottom-coming off preventive effect to prevent that the bearing housing 30 formed together with the stator 11 comes off from the stator 11 in configuration of the mold insert by means of decentralization of a force loaded from the rotor output axis 14 (In this example, mainly, a repulsion force of axial direction from the load and an aspiration force by a magnetic force between the rotor and stator (Fig.1)) to the synthetic resin 18.

Also, as shown in Fig.4 (a), screw receivers arranged at three sites are mold-insert formed together with the stator core 16. The screw receivers are used when a back cover 33 is fixed as shown in Fig.1 and also used to fix the cover at the output side which is not shown in the figure. As such, the stator 11 as shown in Fig.4 (b) is completed by mold-insert configuration.

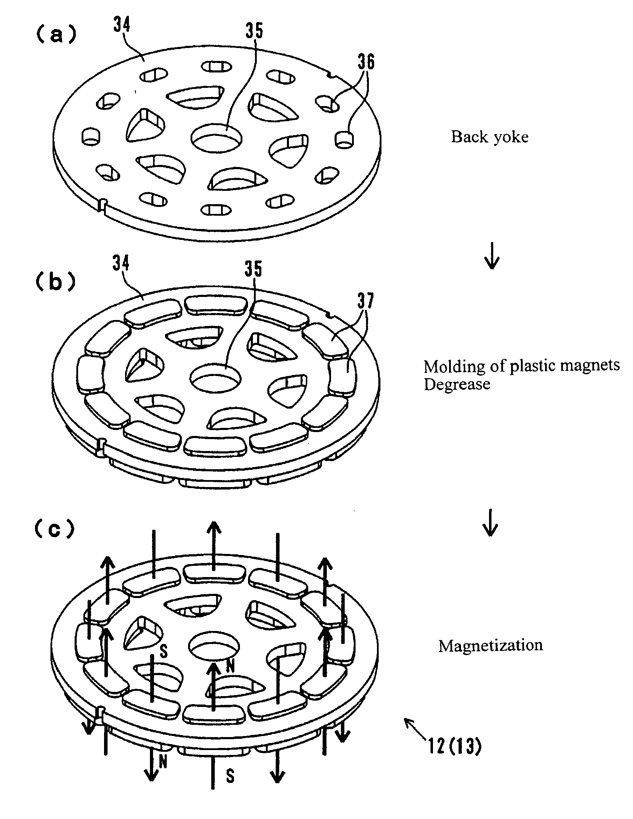

Next, the configurations of the rotors 12 and 13 are explained in Fig.5. Because the configurations of the rotors 12 and 13 are identical, those are not distinguished in the explanation. As shown in Fig.5 (a), in a discoid back yoke 34, a circular hole 35 through which the rotor output axis 14 passes is set at the center and Mg-molded holes 36 for forming magnets 37 are set at multiple sites (In this example, 12 sites) which face the teeth 19 of the stator core 16 when the assembly is conducted at a position close to the outer circumference. Each Mg-molded hole 36 has a non-circular and long and slender shape like a crushed circle in the radial direction of the back yoke 34 at each position.

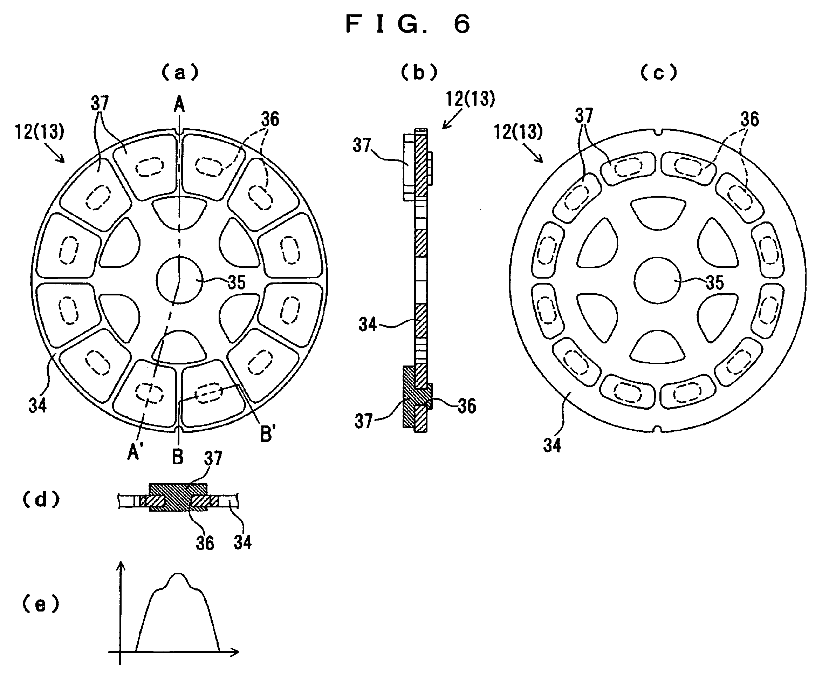

Each of the magnets 37 is formed at each of the Mg-molded hole in the back yoke 34. As shown in Fig.5 (b), each magnet 37, for example, is plastic-magnet-formed by a mixture (magnetic material) of a magnetic material and a thermoplastic resin. Fig.6 (a)-(c) are a front view showing the configurations of the rotors 12 and 13 and a cross-sectional view of A-A' line in (a) and a rear view. As shown in these views, each magnet 37 is formed to have a larger area at the front side facing the stator 11 and a smaller area at the rear site.

After plastic-magnet configuration, as shown in Fig.5(c), the magnetization is conducted in such a manner that a direction of the magnetic flux of adjacent magnets becomes toward the opposite direction in order to complete the rotors 12 and 13.

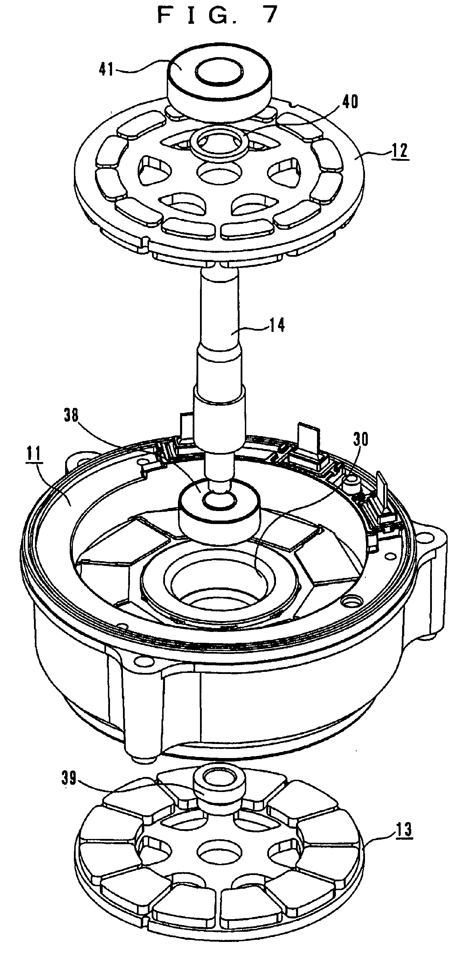

At last, the stator 11 and the rotors 12 and 13 are assembled. As shown in Fig.7, the rotor output axis 14 is formed with different diameters for individual parts in order to prevent each part to come off. First, a ball bearing 38 is fitted in the bearing housing 30 as the bearing 15 of the stator 11 and fixed and the rotor output axis 14 is then inserted from its upper part. The rotor 13 is fitted in from the back side of the stator 11 through a rotor locking part 39. Next, the rotor 12 is fitted in from the upper side of the rotor output axis 14 and a ball bearing 41 as another bearing 42 is fitted in from its upper part through a gap-maintaining part 40. As such the rotor 12 is fixed. At last, as shown Fig.1, the back cover 33 is mounted at the outer side of the rotor 13 to complete the axial air gap type electric motor of the present invention.

In addition, the ball bearing 41 as the bearing 42 installed at the outer side of the rotor 12 is not fixed under the conditions of Figs. 1 and 7, so that the axis is not stable under the conditions. However, the present invention presupposes to be used under a condition that the ball bearing 41 is fixed. For example, although not being shown in figures, a cover can be installed at the output side similarly to the back cover and the ball bearing 41 is fixed by the cover, or parts of the opposite side connected are usable for fixation in electric bicycles applying the axial air gap type electric motor of the present invention. At that time, whatever it is a cover or a part of the opposite side, in these, a bearing 42 molding a bearing housing 43 in which the ball bearing 41 is fitted as shown in Fig.1 is installed. In fitting in the ball bearing 41, a part at the outer circumferential side of the ball bearing 41 is fitted in a bearing house 43 together with a spring part 44 at the rotor 12 side.

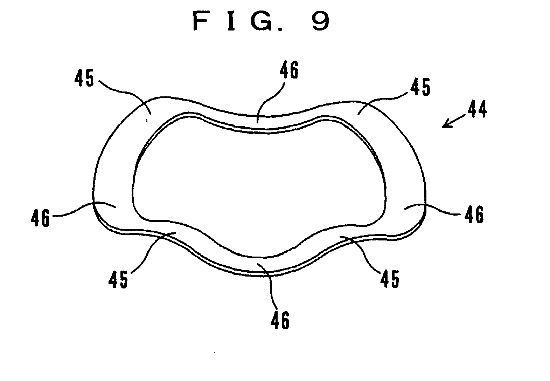

As shown in Fig.9, the spring part 44 is formed like a ring and with a wavy shape in which a top part 45 and a bottom part 46 are formed alternatively. For example, it is formed by metal materials. The wavy shape enables to have an elastic force to a power in axial direction and consequently to add a pre-compression at the outer circumferential side of the ball bearing 41.

Characteristics of the axial air gap type electric motor of the present invention with such configurations is explained. First, as one of characteristics, in connecting the pole members 17a-17i configuring the stator core 16, as shown in Fig.2 (b), a parallel connection is conducted. This connection method enables to reduce the resistance level of the coil to 1/9 of that with the serial connection and thus increase the current level running through the coil, consequently realizing the torque up.

However, when a parallel connection is applied for three-phase configuration, a circulating current occurs unless it is formed with a symmetry between the number of the pole members (hereafter, slot number) and the number of magnets on the rotors 12 and 13 (hereafter, pole number), which causes an adverse effect on the magnet 37, consequently on the torque. Thus, it is necessary to form with a symmetry between the slot number and the pole number in order to prevent such circulating current to occur. Because the present invention assumes the case of three-phase configuration and parallel connection, the slot number is decided to be 3n (n indicates an integer of 2 or higher). Thus, it is necessary to consider about a pole number to the slot number of 3n.

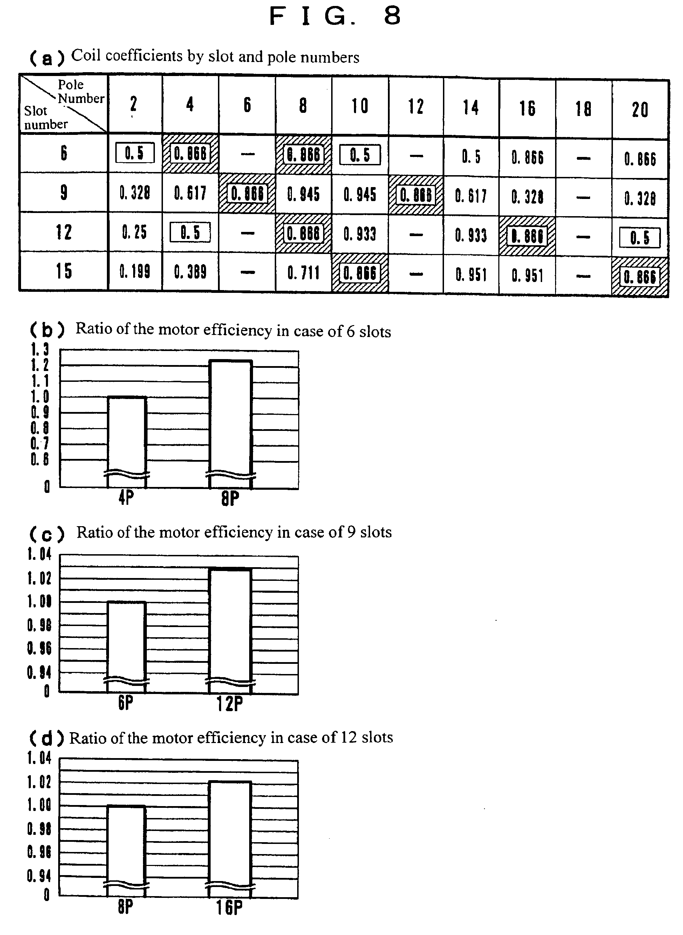

Fig.8 (a) shows the relationship between the pole number and coil coefficient in case of the slot number of 3n. In Fig.8 (a), it is assumed the case of that the connection is made as its phase changes with every one slot. Here, the coil coefficient indicates the performance (output) of the electric motor, in which a higher torque is obtained with its higher level. In Fig.8 (a), the part surrounded by a frame is with a symmetry between the slot number and the pole number, which is a combination not to cause a circulating current. Moreover, the part with a hatching has a symmetry with the highest coil coefficient, 0.866, and it is known that the ratio of the slot number: the pole number in this part is 3n:2n or 3n:4n.

Next, to investigate which case of the slot number: the pole number, 3n:2n or 3n:4n results in a higher output, as shown in Fig.8 (b)-(d), comparative verifications about the efficiencies of the motors were conducted. Here, it is made: the motor efficiency = the output/the input, and the input = the output + the loss. A necessary input to obtain a constant output depends on amount of loss. Thus, as causes to reduce the efficiency, losses of the motor such as copper (due to the coil), iron (due to the iron core of the stator) and circuit (due to the inverter circuit) are listed. Among those, the loss of the iron increases with an increase of the pole number and the losses of the copper and circuit decrease with an increase of the pole number.

Fig.8 (b) shows a comparison of the motor efficiencies between four and eight poles in case of six slots, in which the motor efficiency with four poles is made one. As shown in Fig.8 (b), in case of six slots, the eight pole case has about 1.2 times better efficiency. Similarly, its slightly better efficiency is found with 12 poles in the nine slot case shown in Fig.8 (c), and with 16 poles in the 12 slot case shown in Fig.8 (d). Thus, it can be said that as for the slot number: the pole number, 3n:4n results in a higher output. From this fact, the ratio of the slot number: the pole number = 3n:4n (n indicates an integer of 2 or higher) is adopted for the axial air gap type electric motor of the present invention.

The configuration of the magnet 37 in the rotors 12 and 13 is also one of characteristics for the present invention.

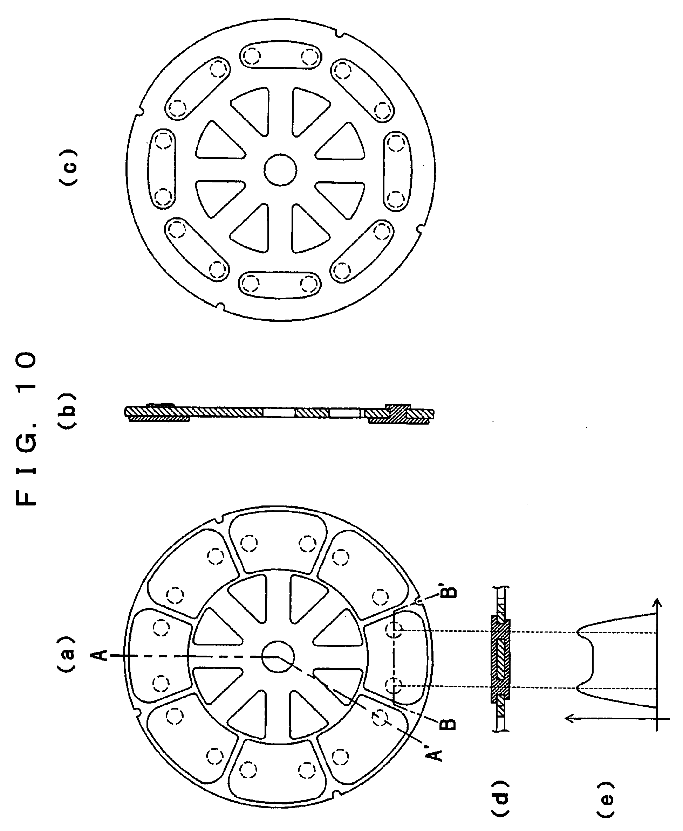

In conventional axial air gap type electric motors with an iron core, it is the slot number: the pole number = 9:8. Because the pole number is less than the slot number, the force which occurs with the iron core and is loaded on one magnet is higher. Because the use of the iron core increases the torque in comparison with coreless case, it was necessary to hold the magnets more firmly. Thus, as shown in Fig.10 (a)-(c), in conventional rotors, one magnet is set for tow holes. However, in such conventional rotors, as shown in Fig.10 (d) or (e), the magnetic flux distribution becomes the largest at both the edges of the wave and flat at the center, which may cause a cogging torque and also influence the torque adversely.

On the other hand, in the present invention, it is the slot number: the pole number = 3n:4n (n indicates a integer of 2 or higher) and the number of slots is less than the number of poles. Thus, the force loaded on one magnet is reduced and the number of holes holding the magnets is one for one magnet. As shown in Fig.6 (d) or (e), because each of the magnet 37 is formed for each of the long and slender Mg-molded holes 36, the magnet at the central part is the thickest, by which the magnetic flux distribution becomes the largest at the central part of the wave. Because the wave as shown in Fig.6 (e) becomes one closer to a sine wave than the conventional wave, a cogging torque can be prevented, resulting in improvement of the torque.

Even if a higher force is added to the magnet 37 because the Mg-molded holes 36 are made with a long and slender shape as a circle is crushed in the radial direction of the back yoke 34, the magnet 37 doesn't rotate because the Mg-molded hole 36 is not a perfect circle. In addition, the Mg-molded holes 36 are not limited to the shape as shown in Fig.6 (a), shapes other than a perfect circle, for example such as ellipse, triangle, rectangle, lozenge or others, are applicable.

Moreover, the axial air gap type electric motor of the present invention is assumed to be used as an auxiliary power of electric bicycles. In such cases, as shown in JP-A-2003-219603 (specifically, Fig.4) of the conventional art, because the load is arranged as becoming adjacent to the rotor output axis 14 of the electric motor in the configuration to assist the pedal axis of the bicycle, a force is loaded on the bearing part by a repulsion force from the load, which may cause a damage. To solve this problem, in the present invention, among the tow ball bearings 38 and 41 as the bearing parts, the ball bearing 38 is installed inside the projection plane of the stator from the vertical direction to the rotation axis, namely at the bearing housing 30 part molded with the stator core 16 in the central space of the stator 11, and another ball bearing 41 is installed outside the projection plane of the stator from the vertical direction to the rotation axis, namely outside the rotor 12 (between the rotor 12 and the load connected with the rotor output axis 14).

Such arrangement has an effect not to damage the ball bearing 38 even if a shock is added externally because the bearing part 15 is installed in the inner circumferential space of the stator 11. Because another bearing part 42 is near the load, even if a repulsion force from the load (a repulsion force in the direction of the rotor diameter and a repulsion force in the axial direction (refer to Fig.1)) is added to the rotor output axis 14, the force loaded on the ball bearing 41 can be reduced in comparison with the conventional one. Moreover, because the gap between the bearing 15 and bearing 42 becomes larger than the conventional one, the force loaded on both the bearings can be reduced. This enables to prevent a damage of the ball bearings as bearing parts and prolong the lifetime.

The bias of the rotor output axis 14 in the axial direction is made for constantly maintaining the ball contact surface inside the ball bearing 38 and prolonging the lifetime of the ball bearing 38 as the bearing part 15. The force biasing the rotor output axis 14 in the axial direction comprises a repulsion force in the axial direction receiving from the load when a driving force is transmitted to the load connected with the rotor output axis 14 and an aspiration force by a magnetic force produced between the magnet 37 set at the rotor 12 and the stator core 16. In the axial air gap type electric motor of the present invention, the two forces are loaded toward the same direction (Fig.1). Thus, a pre-compression is imposed surely on the ball bearing 38, which leads to prolong the lifetime. As for specific loading of the aspiration force by the magnetic force, a difference is set between the distance of the magnet 37 installed at the rotor 12 and the teeth 19 at the stator core 16 and the distance of the magnet 37 installed at the rotor 13 and the teeth 19 at the stator core 16. The difference enables to increase the aspiration force by the magnetic force produced between the magnet 37 and teeth 19 at one of the rotor sides and to bias the rotor output axis 14. For example, in Fig.1, it is configured in such a manner that the distance between the magnet 37 and teeth 19 in the rotor 12 becomes closer than the distance between the magnet 37 and teeth 19 in the rotor 13. Such configuration biases the whole rotor output axis 14 fixing the rotors 12 and 13 toward the right direction as shown in Fig.1. By means of this, because a pre-compression is added to the ball bearing 38 and the ball contact surface inside the bearing becomes at a site, the ball doesn't move violently inside the bearing and consequently, a long lifetime of the ball bearing 38 as the bearing 15 can be realized. A longer lifetime effect is obtained by adjusting the direction for biasing the rotor output axis 14 to fit with the axial direction of the repulsion force from the load connected.

When the rotor output axis 14 is biased and the repulsion force of the axial direction from the load connected is added, a large force is added to the bearing part 15 and moreover, a shock from the load side may be added to the same direction. Thus, a shock resistance is required for the bearing part 15. Under the condition that the ball bearing 38 is molded directly with the synthetic resin 18, the problem of bottom-coming off may occur because the synthetic resin 18 cannot tolerate a shock. Thus, in the present invention, the bearing housing 30 is molded with the synthetic resin 18 and the ball bearing 38 is fixed in the bearing housing 30. Making the bearing housing 30 by metal improves the shock resistance. Because the flange 31 is installed in the bearing housing 30 and molded as being pushed out into the inside of the synthetic resin 18, the compression from the rotor output axis 14 can be dispersed, which improves the shock resistance. The metal-made bearing housing 30 enables to adjust the degree of thermal expansion to become roughly identical to that of the metal-made ball bearing 38, and consequently to prevent the looseness of the bearing part 15.

As for the ball bearing 41, using a spring material 44 as a bias means, the outer circumferential side of the bearing is biased to the same direction as that biasing the rotor output axis 14. In an example as shown in Fig.1, the rotor output axis 14 is biased to the right direction by the magnetic force of the magnet 37, and the outer circumferential side of the ball bearing 41 is also biased to the right direction, using the spring material 44.

Such bias of the ball bearing intends to make the ball contact surface inside the ball bearing 41 constantly at an identical site and consequently to prolong the lifetime. A specific reason why the spring material 44 is needed as its bias means is related to the assembly processes of the axial air gap type electric motor of the present invention.

As shown in Figs. 1 and 7, the rotor output axis 14 is inserted from the upper side of the ball bearing 38 fitted in the bearing housing 30 of the stator 11, and the rotor 13 is fitted in through the rotor locking material 39 from the back face of the stator 11. Moreover, the ball bearing 41 is fitted in through the gap-holding material 40 from the upper side of the rotor 12 fitted in from the upper side of the rotor output axis 14. As such, the rotor 12 is fixed. From the stage when the rotor 12 is mounted as such, a pre-compression is added to the rotor output axis 14 toward the right direction as shown in Fig.1 because of the difference in the distance to the teeth between the rotors 12 and 13. At that time, because the outer circumferential side of the ball bearing 38 is fixed at the bearing housing 30 and the inner circumferential side is fixed at the rotor output axis 14, the inner circumferential side is pulled to the right direction by the influence of the pre-compression, and a displacement occurs as shown in Fig.1. On the other hand, because the inner circumferential side of the ball bearing 41 is fixed at the rotor output axis 14 and the outer circumferential side is not fixed, even if a pre-compression is added, the inner and outer circumferences are influenced together and no displacement thus occurs. That is, it cannot be done to set a site as a ball contact face inside the ball bearing 41 by means of the pre-compression by the magnetic force of the magnet 37.

Thus, using another spring material 44 between the ball bearing 41 and bearing housing 43, the outer circumferential side of the ball bearing 41 is biased to the right direction and a site is set for the ball contact surface inside the ball bearing 41 in order to prolong the lifetime.

In addition, although a wavy shape material is adopted as the spring material 44 as shown in Fig.9, the material is not limited to this shape and other materials which can bias the outer circumferential side of the ball bearing 41 to the right direction are applicable.

## Claims

1. An axial air gap type electric motor (10) with three-phase configuration comprising a stator (11) and two rotors (12,13) each of which is formed substantially with a discoid shape about a common rotation axis (14) facing each other and with a fixed gap, wherein said stator (11) comprises 3n-n indicates an integer of 2 or higher-pole members (17) connected like a ring and said pole members comprise teeth (19) and an insulator (20) insulating the teeth and a coil part, and among said pole members, the coils of the pole members of the same phase being connected electrically in parallel;
wherein said rotor (12,13) is configured as such that multiple magnets (37) are formed at an equal interval annually at positions facing an annular stator core when facing said stator (11) and the ratio of the number of said pole members and the number of the magnets becomes 3n:4n-n indicates an integer of 2 or higher-,
and said rotor (12,13) comprises a back yoke (34) arranged at the same axis as said stator (11) and a molding-applicable magnetic material and has the magnets (37) mounted at said back yoke as facing the teeth of said stator, and said back yoke has Mg-molded holes (36) forming said magnets, and the Mg-molded holes are set at each site per magnetic pole of said magnets.

2. An axial air gap type electric motor according to claim 1, wherein said magnets (37) are formed in such a manner that the non-circular Mg-molded holes (36) are penetrated the back yoke configuring the rotor in the circumferential direction of the positions facing said teeth at an equal interval, and each plastic magnet is molded integrally for the Mg-molded holes.

## Patentansprüche

1. Elektromotor (10) mit axialem Luftspalt mit Dreiphasenkonfiguration, der einen Stator (11) und zwei Läufer (12, 13) umfasst, wovon jeder im Wesentlichen mit einer discoidalen Form um eine gemeinsame Rotationsachse (14) gebildet ist, einander zugewandt und mit einem ortfesten Spalt, wobei der Stator (11), der 3n - n umfasst, eine Ganzzahl von 2 oder höher von - Polelementen (17) anzeigt, die wie ein Ring verbunden sind, und wobei die Polelemente Zähne (19) und einen Isolator (20), der die Zähne isoliert, und einen Spulenteil umfassen, und unter den Polelementen, die Spulen der Polelemente der gleichen Phase elektrisch parallel geschaltet sind;
wobei der Rotor (12, 13) derart konfiguriert ist, dass mehrfache Magnete (37) mit einem gleichen Intervall ringförmig an Positionen gebildet sind, die einem ringförmigen Statorkern zugewandt sind, wenn sie dem Stator (11) zugewandt sind und das Verhältnis der Anzahl der Polelemente und der Anzahl der Magnete wird 3n:4n - n was eine Ganzzahl von 2 oder höher - anzeigt,
und der Rotor (12, 13) hinteres Joch (34), das auf der gleichen Achse wie der Stator (11) angeordnet ist und ein auf ein Formteil anwendbares magnetisches Material umfasst und wobei die Magnete (37) am hinteren Joch, den Zähnen des Stators zugewandt montiert sind, und das hintere Joch Mg-geformte Löcher (36) aufweist, welche die Magnete bilden, und die Mg-geformten Löcher sind an jeder Stelle pro magnetischem Pole der Magnete gesetzt.

2. Elektromotor mit axialem Luftspalt nach Anspruch 1, wobei die Magnete (37) derart gebildet sind, dass die nicht kreisförmigen Mg-geformten Löcher (36) das hintere Joch durchdringen, welches den Rotor in der Umfangsrichtung der Positionen konfiguriert, die den Zähnen in gleichen Intervallen zugewandt sind, und wobei jeder Kunststoffmagnet integral für die Mg-geformten Löcher geformt ist.

## Revendications

1. Moteur électrique du type à entrefer axial (10) et à configuration triphasée, comprenant un stator (11) et deux rotors (12, 13) chacun d'eux étant essentiellement en forme de disque et tournant autour d'un axe de rotation commun (14), faisant face l'un à l'autre et séparés par un intervalle fixe, **caractérisé en ce que** le stator (11) comprend 3n - n étant un nombre entier égal ou supérieur à 2 - éléments polaires (17) connectés de manière annulaire et comportant des dents (19) ainsi qu'un isolant (20) qui sert à isoler les dents et une bobine, et parmi les éléments polaires, les bobines des éléments polaires de la même phase sont connectées électriquement en parallèle;
**caractérisé en ce que** le rotor (12, 13) est configuré de telle manière que des aimants multiples (37) sont formés de façon annulaire avec un même intervalle dans des positions tournées vers un noyau statorique de forme annulaire lorsqu'ils font face au stator (11) et le rapport entre le nombre d'éléments polaires et le nombre d'aimants devient égal à 3n:4n - n étant un nombre entier égal ou supérieur à 2 -;
et le rotor (12, 13) comprend une culasse arrière (34) montée sur le même axe que le stator (11) ainsi qu'un matériau magnétique applicable par moulage, et les aimants (37) montés sur la culasse arrière sont tournés vers les dents du stator, et la culasse arrière comporte des trous à moulage Mg (36) formant les aimants, et les trous à moulage Mg sont disposés dans chaque emplacement pour chaque pôle magnétique de ces aimants.

2. Moteur électrique du type à entrefer axial selon la revendication 1, **caractérisé en ce que** les aimants (37) sont formés de telle manière que les trous non circulaires à moulage Mg (36) sont pénétrés par la culasse arrière qui configure le rotor dans le sens circonférentiel des positions tournées vers les dents à un même intervalle, et chaque aimant en plastique est moulé intégralement pour les trous à moulage Mg.
